(19) Europäisches Patentamt
European Patent Office
Office européen des brevets

(11) Veröffentlichungsnummer: **0 360 842 B1**

(12) **EUROPÄISCHE PATENTSCHRIFT**

(45) Veröffentlichungstag der Patentschrift:
30.09.92 Patentblatt 92/40

(51) Int. Cl.$^5$: **C01G 49/00,** C04B 35/26,
H01F 1/11

(21) Anmeldenummer: **89900575.5**

(22) Anmeldetag: **22.12.88**

(86) Internationale Anmeldenummer:
**PCT/DE88/00774**

(87) Internationale Veröffentlichungsnummer:
**WO 89/07088 10.08.89 Gazette 89/18**

(54) **VERFAHREN ZUR HERSTELLUNG VON HEXAFERRITPULVER MIT BARIUM ODER STRONTIUMHYDROXYDLÖSUNG.**

(30) Priorität: **06.02.88 DE 3803596**

(43) Veröffentlichungstag der Anmeldung:
**04.04.90 Patentblatt 90/14**

(45) Bekanntmachung des Hinweises auf die Patenterteilung:
**30.09.92 Patentblatt 92/40**

(84) Benannte Vertragsstaaten:
**DE FR GB IT**

(56) Entgegenhaltungen:
**DE-A- 1 911 524**
**US-A- 3 810 973**
**CHEMICAL ABSTRACST, vol. 85, no.4, 26 July 1976, Columbus, OH (US); S.SOLACOLU et al., p. 295, no. 25871c.**
**CHEMICAL ABSTRACTS, vol. 107, no. 16, October 1987, Columbus, OH (US); p. 789, no. 146098n.**

(73) Patentinhaber: **ROBERT BOSCH GMBH**
**Postfach 30 02 20**
**W-7000 Stuttgart 30 (DE)**

(72) Erfinder: **SCHWEIGERT, Hans**
**Birnenbuchstr. 8**
**W-4690 Herne (DE)**
Erfinder: **CORBACH, Rainer**
**Amthaus 2**
**W-4710 Lüdinghausen (DE)**
Erfinder: **ODOR, Frank**
**Alexanderstr. 52**
**W-7000 Stuttgart 1 (DE)**
Erfinder: **SCHIPPAN, Ralph**
**An der Stadtmauer 11**
**W-4300 Essen 16 (DE)**

EP 0 360 842 B1

## Beschreibung

Die Erfindung betrifft ein Verfahren zur Herstellung von Barium- oder Strontiumhexaferritpulver für die Produktion von Dauermagneten, bei dem die unter Zusatz von Wasser homogenisierte Rohstoffmischung, die Eisenoxid und Barium- bzw. Strontiumcarbonat als Feststoffe enthält, zu Hexaferrit reaktionsgebrannt wird.

Ein solches Verfahren ist bekannt. Das mit Hilfe dieses Verfahrens hergestellte Barium- oder Strontiumhexaferritpulver wird im Anschluß an den Reaktionsbrand mittels einer Naßpresse im Magnetfeld zum Dauermagnetgrünling verpreßt, der nach dem Trocknen in einem Durchlaufofen zum fertigen Dauermagneten gesintert wird. Dieses Verfahren eignet sich vorzugsweise zur Massenproduktion von Dauermagneten, die insbesondere in Elektrokleinmotoren der Automobilindustrie eingesetzt werden.

Um eine möglichst hohe Ausbeute an reaktionsgebranntem Hexaferritpulver zu erreichen, ist es wünschenswert, die Rohstoffmischung mit einem möglichst hohen Feststoffanteil, d.h. einem möglichst geringen Wasseranteil, in den Einlauf des Durchlaufofens einzubringen.

Die magnetische Qualität des fertigen Dauermagneten hängt wesentlich von der mikrokristallinen Beschaffenheit des reaktionsgebrannten Hexaferritpulvers ab, die wesentlich durch das Aufbereiten der Rohstoffmischung bedingt ist. Dabei ist es erforderlich, eine möglichst homogene Mischung der eingewogenen Rohstoffe zu erreichen. Dies wird beim bekannten Verfahren dadurch erleichtert, daß der Rohstoffmischung Wasser in der erforderlichen Menge zugegeben wird, um den Feuchtigkeitsgehalt der Mischung zu erhöhen. Da jedoch beim Einlauf in den Durchlaufofen möglichst wenig Wasser vorhanden sein soll, muß entweder die Zugabemenge des Wassers begrenzt sein, oder die Rohstoffmischung muß vor dem Reaktionsbrand entwässert werden.

Ein solches Verfahren weist insofern Schwachpunkte auf, als einerseits das Entwässern der Rohstoffmischung Kosten verursacht und andererseits die beim bekannten Verfahren erzielbaren magnetischen Werte für das Hexaferritpulver begrenzt sind. Ferner verursacht das als Feststoff zugegebene Strontiumcarbonat einen Großteil der Rohstoffkosten.

Ferner ist ein Herstellungsverfahren für Barium- oder Strontiumhexaferritpulver bekannt, bei dem mit Hilfe der chemischen Copräzipitation aus Barium- bzw. Strontiumchloriden und Eisenchlorid unter Zusatz eines Fällungsmittels Hexaferritpulver mit guten magnetischen Eigenschaften gewonnen wird. Ein solches Verfahren ist jedoch für die großtechnische Realisierung unzulänglich, da die Kosten für das Fällungsmittel und die Metallchloride sehr hoch sind.

Daher liegt der Erfindung die Aufgabe zugrunde, ein Verfahren der eingangs genannten Art derart zu verbessern, daß es einerseits wirtschaftlicher wird und andererseits die magnetischen Eigenschaften des Hexaferritpulvers verbessert werden.

Diese Aufgabe wird erfindungsgemäß dadurch gelöst, daß der Rohstoffmischung eine Barium- oder Strontiumhydroxidlösung zugegeben wird, die mindestens zum Teil das Barium- bzw. Strontiumcarbonat ersetzt.

Die Erfindung zeichnet sich dadurch aus, daß ein möglichst großer Anteil des der Rohstoffmischung als Feststoff zugegebenen Carbonates durch eine Barium- oder Strontiumhdroxidlösung ersetzt wird, bei der die Barium- oder Strontiumoxidionen in einem Lösungsmittel vorliegen. Auf diese Weise erfolgt im Mischvorgang eine Durchmischung der Rohstoffe nunmehr auf ionischer Basis. Aufgrund der besseren Mischbarkeit des Rohstoffes kann somit der Wassergehalt der Rohstoffmischung reduziert werden. Beim Mischen lagern sich die Barium- oder Strontiumoxidionen sehr viel gleichmäßiger an den Eisenoxidpartikeln an, so daß beim anschließenden Reaktionsbrand eine vollständigere Umsetzung des Rohstoffes in Hexaferrit erfolgt. Hierdurch erhöht sich die Wirtschaftlichkeit des Verfahrens. Eine Verbesserung der magnetischen Kennwerte des Hexaferritpulvers ergibt sich dadurch, daß infolge der verbesserten Durchmischung der reaktionsgesinterte Hexaferrit ein sehr enges Kornband (zwischen 0,1 bis 3 $\mu$m, vorzugsweise zwischen 0,5 und 1,5 $\mu$m) mit außerordentlich fehlerarmen Kristallen aufweist. Die Barium- oder Strontiumoxidlösung kann beim Einwiegen der Rohstoffe an einer Ansatzwaage wesentlich leichter zugeführt werden als das als Feststoff zugeführte Carbonat, welches über Transportschnecken zugeführt werden muß.

Ein zusätzlicher wirtschaftlicher Vorteil ergibt sich dann, wenn das Barium- oder Strontiumhydroxid den Abfallprodukten des Produktionsprozesses entnommen wird. Bei einer vorteilhaften Ausgestaltung des Verfahrens wird das Hydroxid einer Vorstufe des Produktionsprozesses von Barium- bzw. Strontiumcarbonat entnommen. Beim Herstellungsvorgang der Carbonate wird die Barium- oder Strontiumoxidlösung mit kohlesäurehaltigem Wasser versetzt, wobei das Carbonat ausfällt, welches als Feststoff weiterverarbeitet wird. Wenn jedoch direkt die vor dem Versetzen mit kohlesäurehaltigem Wasser schon vorhandene Barium- oder Strontiumoxidlösung der Rohstoffmischung beigegeben wird, kann hierfür der Prozeßschritt des Ausfällens entfallen.

Eine weitere vorteilhafte Ausführung des Verfahrens ergibt sich dann, wenn das beim Naßpressen des reaktionsgebrannten Hexaferritpulvers zum Dauermagneten anfallende Pressenabwasser, welches ebenfalls Barium- bzw. Strontiumoxidionen in Lösung enthält, für den Rohstoffansatz verwendet wird. Da üblicherweise bei der Aufbereitung des Hexaferritpulvers zum Naßpressen mit einem Barium- oder Strontiumoxidüberschuß gearbeitet wird, befindet sich das überschüssige Barium- oder Strontiumoxid im austretenden Pressenwasser. Dies ist deswegen bedeutsam, da der Barium- bzw. Strontiumoxidanteil einen wesentlichen Faktor bei den Rohstoffkosten ausmacht.

Die Erfindung wird im folgenden anhand einer ein Ausführungsbeispiel darstellenden Zeichnung näher erläutert.

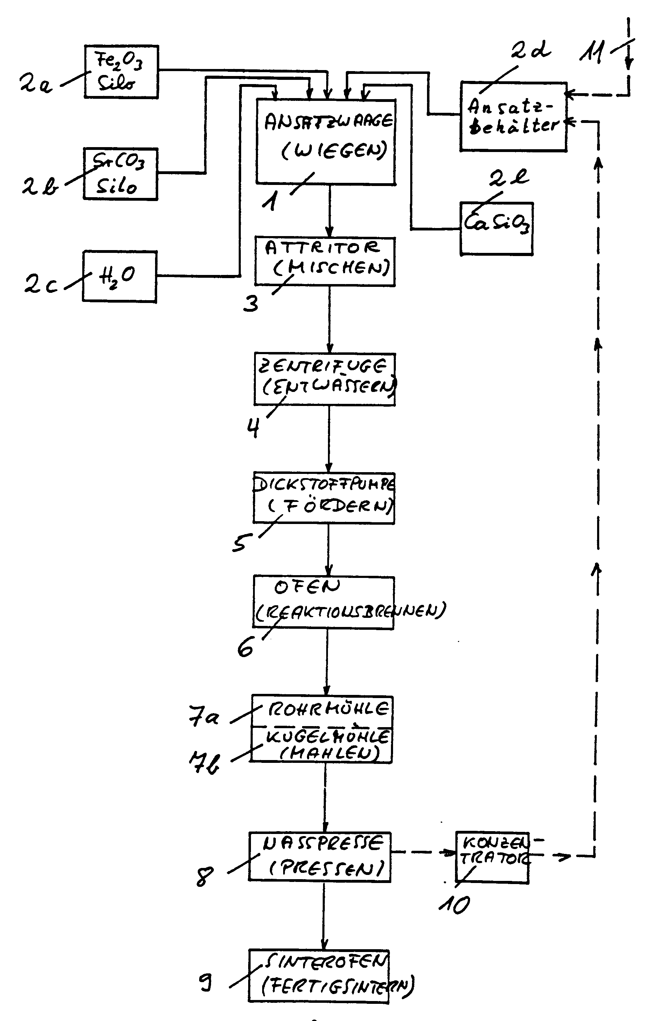

Die Zeichnung zeigt den Verfahrensablauf bei der Herstellung von Dauermagneten aus Strontiumhexaferrit.

Mittels einer Ansatzwaage 1 werden die Komponenten der Rohstoffmischung nacheinander eingewogen. Neben den Hauptkomponenten Eisenoxid 2a und Strontiumcarbonat 2b sowie Strontiumhydroxid 2d wird der Rohstoffmischung auch ein bestimmter Anteil Wasser 2c zugegeben, um eine gute Mischbarkeit zu erreichen. Die Bemessung der einzelnen Komponenten des Rohstoffansatzes erfolgt derart, daß die für die magnetischen Eigenschaften verantwortliche stöchiometrische Relation zwischen Strontiumoxid (SrO) und Eisenoxid ($Fe_2O_3$) von etwa 5,3 bis 5,5 erfüllt ist. Zusätzlich wird der Rohstoffmischung ein feinkörniges und in Wasser dispergiertes Calciumsilicat als Kleinkomponente 2e mit einem Anteil von 0,5 bis 0,8% zugegeben, das als Glasbildner beim Ferritbildungsprozeß fungiert.

Die Ferststoffkomponenten Eisenoxid 2a und Strontiumcarbonat 2b werden über Austragsschnecken der Ansatzwaage 1 zugeführt, während die flüssigen Komponenten Wasser 2C, Strontiumhydroxid 2d und die Kleinkomponente Calciumsilicatdispersion 2e über Rohrleitungen zugeführt wird. Nach dem Einwiegen wird die Rohstoffmischung einem Mischer 3 zugeführt, der vorteilhafterweise als Attritor oder Rührmischer ausgeführt ist. Die im Attritor homogenisierte Rohstoffmischung wird im Anschluß daran in einer Durchlaufkugelmühle auf die gewünschte Feinheit gebracht. Anschließend durchläuft die Rohstoffmischung eine Zentrifuge 4, bei der noch überflüssiges Wasser abzentrifugiert wird, so daß die konzentrierte Rohstoffmischung die für eine möglichst hohe Durchsatzleistung des als Durchlaufofen ausgebildeten Ofens 6 für den Reaktionsbrand erforderliche Konsistenz hat. Der Wassergehalt beträgt in dieser Verfahrensstufe nur noch 20-30%, vorzugsweise 22-26%. Die Rohstoffmischung wird mit Hilfe einer Dickstoffpumpe 5 aus der Zentrifuge in den Durchlaufofen gefördert. Um eine möglichst kontinuierliche Förderung des Rohstoffstranges zu erreichen, wird vorteilhafterweise eine Zweikolbendickstoffpumpe eingesetzt, deren hydraulisch beaufschlagte Kolben in Tandemfunktion arbeiten.

Nach Durchlauf durch den Durchlaufofen 6 liegt nunmehr reaktionsgebrannter Hexaferrit als Granulat vor, der in nachfolgenden Produktionsschritten zum Dauermagneten weiterverarbeitet wird.

Nach einem Mahlvorgang, der sich aus einem Trockenmahlprozeß in einer Rohrschwingmühle 7a und einem nachgeschalteten Naßmahlvorgang in einer Kugelmühle 7b zusammensetzt, vor dem das aufgemahlene Pulver wieder mit Wasser versetzt wird, wird das pastöse Magnetmaterial mittels einer Naßpress 8 zum Grünling verdichtet, der nach dem Trocknen im anschließenden Fertigsinterprozeß in einem Sinterofen 9 zum fertigen Dauermagneten weiterverarbeitet wird.

Das bei der Naßpresse 8 anfallende Pressenwasser weist Strontiumoxidionen in gelöster Form auf, da bei der Aufbereitung der Magnetpaste zum Naßpressen mit einem gewissen Strontiumoxidüberschuß gearbeitet wird. Um eine möglichst große Menge an strontiumoxidhaltigem Abwasser zu gewinnen, wird das Pressenabwasser mittels einer Wasserstrahlpumpe aus den Ablaufkanälen des Pressenwerkzeuges abgesaugt. Da die Strontiumoxidkonzentration im Pressenabwasser verhältnismäßig gering ist, wird das abgeführte Pressenwasser durch einen Konzentrator 10 geleitet, durch den die Strontiumoxidkonzentration z.B. durch mehrfaches Durchleiten des Abwasserstromes erhöht wird. Das Wasser mit dem konzentrierten Strontiumoxid wird anschließend über eine Rohrleitung in den Ansatzbehälter 2b der Strontiumoxidlösung zurückgepumpt. In diesen Ansatzbehälter 2d mündet auch eine Rohrleitung 11, aus der Strontiumhydroxid eingespeist wird, welches als Vorprodukt bei der Herstellung von Strontiumcarbonat anfällt.

Dadurch, daß bei dem dargestellten Ausführungsbeispiel ein Großteil des Feststoffes Strontiumcarbonat unter Wahrung der stöchiometrischen Relation zwischen Strontiumoxid und Eisenoxid durch Strontiumhydroxidlösung ersetzt wird, erfolgt eine wesentlich innigere Durchmischung des Rohstoffansatzes im Mischer 3. Dies führt im Durchlaufofen 6 zu einem vollständigen Ablauf der Hexaferritbildung, so daß sich äußerst fehlerfreie Kristalle bilden, deren Größe innerhalb eines sehr engen Kornbandes liegt. Die vollständige Umsetzung in die Hexaferritphase kann durch eine Dichtemessung, beispielsweise mit Hilfe der Quecksilber-Porosimetrie, überwacht werden. Mit dem auf diese Weise hergestellten Strontiumferritpulver lassen sich im folgenden Produktionsprozeß Dauermagnete mit erheblich verbesserten magnetischen Eigenschaften herstellen.

Der wirtschaftliche Vorteil ist darin zu sehen, daß ein erheblicher Anteil des Strontiumcarbonatfeststoffes eingespart werden kann, da das aus Abfallprodukten wiederaufbereitete Strontiumoxid in Lösung anstelle des Feststoffes verwendet werden kann.

Darüber hinaus kann auch die bei der Herstellung von Strontiumcarbonat anfallende Strontiumoxidlösung direkt vom Hersteller des Strontiumcarbonates bezogen werden, ohne daß die Zwischenstufe, die aus der Versetzung der Strontiumoxidionen mit kohlesäurehaltigem Wasser besteht, ausgeführt werden muß.

**Patentansprüche**

1. Verfahren zur Herstellung von Barium- oder Strontiumhexaferritpulver für die Produktion von Dauermagneten, bei dem die unter Zusatz von Wasser (2c) homogenisierte Rohstoffmischung, die Eisenoxid (2a) und Barium- bzw. Strontiumcarbonat (2b) als Feststoffe enthält, zu Hexaferrit reaktionsgebrannt wird, **dadurch gekennzeichnet**, daß der Rohstoffmischung (2a, 2b, 2c,) eine Barium- oder Strontiumhydroxidlösung (2d) zugegeben wird, die mindestens zum Teil das Barium- bzw. Strontiumcarbonat (2b) ersetzt.

2. Verfahren nach Anspruch 1, **dadurch gekennzeichnet**, daß die Barium- bzw. Strontiumhydroxidlösung einer Vorstufe des Produktionsprozesses für Barium- bzw. Strontiumcarbonat entnommen wird.

3. Verfahren nach Anspruch 1 oder 2, **dadurch gekennzeichnet**, daß die Barium- bzw. Strontiumhydroxidlösung dem beim Naßpressen des reaktionsgebrannten Hexaferritpulvers zum Dauermagneten anfallenden Abwasser entnommen wird.

4. Verfahren nach einem der Ansprüche 1 bis 3, **dadurch gekennzeichnet**, daß der Wassergehalt der Rohstoffmischung unmittelbar vor dem Reaktionsbrand (6) zwischen 20% und 30%, vorzugsweise zwischen 22% und 26% liegt.

5. Verfahren nach einem der Ansprüche 1 bis 4, **dadurch gekennzeichnet**, daß das Kornband des Hexaferritpulvers zwischen 0,1 bis 3μm, vorzugsweise zwischen 0,5 und 1,5 μm liegt.

6. Verfahren nach einem der Ansprüche 1 bis 5, **dadurch gekennzeichnet**, daß die Rohstoffmischung mittels einer Dickstoffpumpe (5) in den Durchlaufofen (6) gefördert wird.

7. Verfahren nach Anspruch 6, **dadurch gekennzeichnet**, daß als Dickstoffpumpe (5) eine hydraulisch beaufschlagte, Zweikolben-Tandempumpe verwendet wird.

8. Verfahren nach Anspruch 3, **dadurch gekennzeichnet**, daß das beim Pressen anfallende Abwasser mittels einer Wasserstrahlpumpe aus den Ablaufkanälen des Pressenwerkzeuges abgesaugt wird.

**Claims**

1. Process for the preparation of barium hexaferrite powder or strontium hexaferrite powder for the production of permanent magnets, wherein the raw material mixture which has been homogenized with addition of water (2c) and contains iron oxide (2a) and barium carbonate or strontium carbonate (2b) as the solids, is reaction-fired to give hexaferrite, characterized in that a solution of barium hydroxide or strontium hydroxide (2d), replacing at least a part of the barium carbonate or strontium carbonate (2b), is added to the raw material mixture (2a, 2b, 2c,).

2. Process according to Claim 1, characterized in that the solution of barium hydroxide or strontium hydroxide is taken from an early stage of the production process for barium carbonate or strontium carbonate.

3. Process according to Claim 1 or 2, characterized in that the solution of barium hydroxide or strontium hydroxide is taken from the effluent arising in the wet pressing of the reaction-fired hexaferrite powder to give the permanent magnet.

4. Process according to one of Claims 1 to 3, characterized in that the water content of the raw material mixture immediately before reaction-firing (6) is between 20% and 30%, preferably between 22 % and 26 %.

5. Process according to one of Claims 1 to 4, characterized in that the grain size band width of the hexaferrite powder is between 0.1 and 3 μm, preferably between 0.5 and 1.5 μm.

6. Process according to one of Claims 1 to 5, characterized in that the raw material mixture is transferred into the continuous furnace (6) by means of a slurry pump (5).

7. Process according to Claim 6, characterized in that a hydraulically loaded twin-piston tandem pump is used as the slurry pump (5).

8. Process according to Claim 3, characterized in that the effluent arising on pressing is extracted by means of a water jet pump from the discharge channels of the press mould.

**Revendications**

1.- Procédé pour la fabrication de poudre d'hexaferrite de baryum ou de strontium pour la production d'aimants permanents, procédé dans lequel le mélange de matières premières homogénéisées sous adjonction d'eau (2c), et qui contient comme matières solides de l'oxyde de fer (2a) et du carbonate de baryum ou de strontium (2b), est calciné pour donner de l'hexaferrite, procédé caractérisé en ce qu'on ajoute au mélange des matières premières (2a, 2b, 2c) une solution d'hydroxyde de baryum ou de strontium (2d), qui remplace tout au moins en partie le carbonate de baryum ou de strontium (2b).

2.- Procédé selon la revendication 1, caractérisé en ce que la solution d'hydroxyde de baryum ou de strontium est prélevée à une étape préalable du processus de production du carbonate de baryum ou de strontium.

3.- Procédé selon la revendication 1 ou la revendication 2, caractérisé en ce que la solution d'hydroxyde de baryum ou de strontium est prélevée sur l'eau résiduaire résultant du pressage en milieu humide de la poudre d'hexaferrite calcinée pour obtenir des aimants permanents.

4.- Procédé selon une des revendications 1 à 3, caractérisé en ce que la teneur en eau du mélange des matières premières, directement avant la calcination (6), se situe entre 20 % et 30 %, de préférence entre 22 % et 26 %.

5.- Procédé selon une des revendications 1 à 4, caractérisé en ce que la bande de granulation de la poudre d'hexaferrite se situe entre 0,1 et 3 x $10^{-6}$ m, de préférence entre 0,5 et 1,5 x $10^{-6}$ m.

6.- Procédé selon une des revendications 1 à 5, caractérisé en ce que le mélange des matières premières est refoulé dans le four continu (6) au moyen d'une pompe de liquides épais (5).

7.- Procédé selon la revendication 6, caractérisé en ce que, comme pompe de liquides épais (5), on utilise une pompe à deux pistons en tandem actionnés hydrauliquement.

8.- Procédé selon la revendication 3, caractérisé en ce que l'eau résiduaire résultant du pressage est pompée à partir des canaux d'évacuation de l'outillage de pressage au moyen d'un injecteur.